(19) **Europäisches Patentamt European Patent Office Office européen des brevets**

(11) **EP 4 311 957 B1**

(12) **FASCICULE DE BREVET EUROPEEN**

(45) Date de publication et mention de la délivrance du brevet:
**06.08.2025 Bulletin 2025/32**

(21) Numéro de dépôt: **23182031.7**

(22) Date de dépôt: **28.06.2023**

(51) Classification Internationale des Brevets (IPC):
**F16C 33/78** *(2006.01)*   **F16C 41/00** *(2006.01)*
**F16J 15/3264** *(2016.01)*   **B60B 27/00** *(2006.01)*
**F16C 19/18** *(2006.01)*   **F16C 33/80** *(2006.01)*

(52) Classification Coopérative des Brevets (CPC):
**F16J 15/3264; F16C 33/805; F16C 41/007;**
B60B 27/0073; F16C 19/186; F16C 33/7883;
F16C 2240/70; F16C 2326/02

(54) **JOINT D'ÉTANCHÉITE STATIQUE ET ENSEMBLE DE MOYEU DE ROUE MOTRICE L'INTÉGRANT**

STATISCHE DICHTUNG UND RADNABENANORDNUNG MIT EINER SOLCHEN DICHTUNG

STATIC SEAL AND DRIVE WHEEL HUB ASSEMBLY INCORPORATING SAME

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.07.2022 FR 2207748**

(43) Date de publication de la demande:
**31.01.2024 Bulletin 2024/05**

(73) Titulaire: **NTN Europe**
**74000 Annecy (FR)**

(72) Inventeur: **POURROY-SOLARI, Vincent**
**74230 THONES (FR)**

(74) Mandataire: **Alatis**
**3, rue Paul Escudier**
**75009 Paris (FR)**

(56) Documents cités:
**CN-A- 113 464 567    DE-A1- 3 418 440**
**FR-A1- 2 605 557    JP-A- 2009 293 686**

**Description**

## DOMAINE TECHNIQUE DE L'INVENTION

L'invention se rapporte à un ensemble de moyeu de roue motrice de véhicule comportant un moyeu de roue et un bol de transmission, et plus spécifiquement à la protection d'une interface entre le moyeu de roue et le bol de transmission.

## ÉTAT DE LA TECHNIQUE ANTÉRIEURE

Dans les ensembles de moyeu de roue motrice, un moyeu de roue est guidé en rotation par un palier à roulement fixé mécaniquement à un support de roue. Afin de transmettre aux roues motrices le mouvement de rotation provenant de la transmission du véhicule automobile, le moyeu est solidarisé en rotation à un bol de transmission, le plus souvent par interpénétration de deux jeux de cannelures.

Dans la suite de la description, on se référera à un axe de révolution de l'ensemble de moyeu de roue, et à une orientation le long de cet axe avec un avant et un arrière qui correspondent respectivement au côté où une roue est montée sur le moyeu de roue (côté extérieur du véhicule), et au côté où la transmission est reliée au bol de transmission (côté intérieur du véhicule).

La solidarisation en rotation du moyeu de roue motrice et du bol de transmission se fait au niveau d'une interface, c'est-à-dire d'une zone de contact mutuel, qui peut présenter une portion s'étendant en direction longitudinale et une portion s'étendant en direction radiale par rapport à l'axe de révolution de l'ensemble de moyeu de roue. Cette interface peut comporter un jeu de cannelures faciales ou radiales formées sur les parties du moyeu de roue et du bol de transmission coopérants entre elles. Les cannelures sont dites « radiales » lorsque les flancs des cannelures font saillie en direction radiale à partir du fond de cannelure, les fonds de cannelure étant alors de préférence situés approximativement sur un même cylindre et s'étendant en direction longitudinale. Elles sont dites « faciales » lorsque les flancs de cannelure font saillie axialement à partir du fond de cannelure, les fonds de cannelures étant alors préférentiellement situés approximativement dans un même plan perpendiculaire à l'axe de révolution, ou sur une même surface approximativement tronconique ou torique autour de l'axe de révolution, et s'étendant en direction radiale. Le moyeu de roue est relié mécaniquement à un support de roue par un palier à roulements à une ou plusieurs rangées de corps roulants, dont une bague intérieure dite « arrière » fait face au bol de transmission.

Dans toutes les configurations décrites, l'interface entre bol de transmission et moyeu annulaire présente un pourtour radialement extérieur, situé de préférence à une extrémité longitudinale arrière du bol de transmission, à proximité de la bague de roulement intérieure arrière, et pouvant le cas échéant être séparé de la bague intérieure arrière par un bourrelet de matière formé à l'extrémité longitudinale intérieure du moyeu, par exemple par bouterollage. Dans l'hypothèse où l'interface comporte des cannelures faciales, celles-ci peuvent s'étendre jusqu'à ce pourtour radial extérieur, qui aura alors un profil cannelé. En l'absence de cannelures faciales, le pourtour radial extérieur de l'interface peut être circulaire. En présence de cannelures faciales, le pourtour peut présenter des interstices du fait d'un emboîtement imparfait des cannelures.

Or du fait de la position très exposée de l'ensemble de moyeu de roue motrice, ses composants sont soumis aux projections provenant de la roue ou de la chaussée. Il est donc préconisé, dans l'état de la technique relatif aux interfaces à cannelures faciales, de prévoir une étanchéité statique pour couvrir le pourtour extérieur de l'interface et protéger les cannelures contre la pénétration de polluants. Dans l'art antérieur, ces dispositifs d'étanchéification statiques sont constitués d'un joint d'étanchéité statique relié mécaniquement à une bague intérieure du roulement arrière. D'autre part, le roulement arrière est quant à lui protégé par un joint dynamique, par exemple un joint à cassette, interposé entre la bague intérieure et une bague extérieure du côté du bol de transmission. De plus, un codeur axial est le plus souvent monté contre la bague intérieure du roulement arrière.

Cette configuration conduit à l'emmanchement de nombreuses pièces dans une zone réduite et nécessite un joint d'étanchéité statique de forme complexe et comprenant des parties flexibles assemblées le plus souvent par surmoulage à des armatures métalliques de formes complexes.

Les documents EP 2 042 755 A1 et US 2011/077089 A1 décrivent de tels dispositifs d'étanchéité statiques composites, selon le préambule de la revendication 1, qui sont aptes à couvrir un interstice formé entre les cannelures faciales d'une extrémité arrière du moyeu de roue et d'une face avant d'un bol de transmission. Ces dispositifs d'étanchéité statiques composites présentent une surface d'étanchéité axiale apte à s'appuyer sur une face arrière de bague intérieure d'un roulement du moyeu de roue, et une surface d'étanchéité radiale apte à presser la périphérie d'une extension de bulbe du bol de transmission.

Les joints d'étanchéification statiques de l'art antérieur sont généralement frettés sur la bague intérieure de roulement ou sur le bol de transmission, ce qui impose des tolérances de fabrication et de montage étroites, d'où un coût de fabrication et de montage élevés.

De plus, aucune préconisation n'est faite pour la protection des interfaces entre bol de transmission et moyeu de roue en l'absence de cannelures faciales, sans doute parce qu'une telle protection semble superflue. Or on constate sur toutes les interfaces, tant à cannelures faciales que radiales, des risques de corrosion, qu'on soupçonne être une cause de micro-frottements et de bruits lorsque le véhicule roule.

**EXPOSÉ DE L'INVENTION**

La présente invention a pour but de remédier à tout ou partie des inconvénients de l'état de la technique en proposant notamment un joint d'étanchéité statique facile à monter et ayant vocation à être utilisé tant pour des interfaces à cannelures faciales que pour des interfaces sans cannelures faciales.

À cet effet, l'invention vise, selon un premier aspect, un joint d'étanchéité statique annulaire pour un ensemble de moyeu de roue motrice comportant un moyeu de roue, un bol de transmission et une bague intérieure de roulement frettée sur le moyeu de roue et maintenue axialement par une collerette formant une extrémité arrière du moyeu de roue, le joint d'étanchéité statique définissant un axe de référence et étant apte, dans une position de montage, à couvrir un pourtour extérieur annulaire d'une interface entre le moyeu de roue et le bol de transmission située à l'extrémité arrière du moyeu de roue, le joint d'étanchéité statique comprenant au moins une surface d'étanchéité arrière apte, dans la position de montage, à être en appui annulaire continu sur un siège de joint statique arrière formé sur le bol de transmission, et au moins une surface d'étanchéité avant apte, dans la position de montage, à être en appui annulaire continu sur un siège de joint statique avant formé sur la collerette du moyeu de roue, sur la bague intérieure de roulement ou sur un déflecteur ou un codeur fixé à la bague intérieure de roulement. Selon l'invention, le joint d'étanchéité statique comporte une portion d'accrochage annulaire élastiquement déformable en saillie radialement vers l'axe de référence, apte à être amenée en position de montage par mouvement axial du joint d'étanchéité statique vers la bague intérieure de roulement et par effacement élastique de la portion d'accrochage au passage de la collerette du moyeu de roue, et à être positionnée, dans la position de montage, axialement entre une face transversale de la bague intérieure de roulement et une face de la collerette du moyeu de roue tournée vers la bague intérieure de roulement en réalisant un accrochage élastique du joint d'étanchéité statique au moyeu de roue.

En position de montage, une extrémité radiale intérieure de la portion d'accrochage est plus proche de l'axe de référence qu'une extrémité radiale extérieure de la collerette du moyeu de roue, ce qui assure un verrouillage de forme du joint d'étanchéité statique en direction axiale, et un verrouillage de force en direction circonférentielle.

De façon préférentielle [REV.2], on prévoit qu'avant montage, l'axe de référence est situé à une distance D1 de la portion d'accrochage et à une distance D2 d'une portion de transition du joint d'étanchéité statique, destinée à être positionnée, dans la position de montage, radialement en regard d'une partie de la collerette du moyeu de roue la plus éloignée de l'axe de référence, et qu'une ou plusieurs des caractéristiques dimensionnelles suivantes sont réalisées :

- 

$$D2-D1>2mm$$

- 

$$D2-D1>5mm$$

- 

$$D2-D1<8mm$$

- 

$$D2-D1<10mm.$$

Ces dimensions assurent un montage aisé et un accrochage efficace. Les valeurs les plus faibles de la plage définie permettront de diminuer l'effort de montage, et simplifieront le cas échéant le moulage du joint d'étanchéité statique. Les valeurs plus élevées se traduiront pas un accrochage et un verrouillage plus efficace.

Suivant un mode de réalisation, le joint d'étanchéité statique comprend une portion intermédiaire reliant la portion d'accrochage et la surface d'étanchéité arrière ou l'une des surfaces d'étanchéité arrière, et apte, dans la position de montage, à couvrir le pourtour extérieur de l'interface entre le moyeu de roue et le bol de transmission.

Suivant un mode de réalisation particulièrement avantageux, la portion intermédiaire, qui peut être un manchon, présente une raideur en flexion et en torsion, qui est sensiblement inférieure à celle de la portion d'accrochage, pour découpler mécaniquement la surface d'étanchéité avant de la surface d'étanchéité arrière et éviter que les déplacements relatifs entre le bol de transmission et le moyeu de roue, induits par les contraintes dynamiques en fonctionnement, n'induisent de perte de contact au niveau de la portion d'accrochage. Pour les mêmes raisons, la portion intermédiaire présente une raideur en flexion et en torsion, qui est sensiblement inférieure à celle d'une portion d'étanchéité arrière sur laquelle est formé la surface d'étanchéité arrière.

Suivant un mode de réalisation, la portion intermédiaire délimite avec la surface d'étanchéité avant ou l'une des surfaces d'étanchéité avant et la surface d'étanchéité arrière ou l'une des surfaces d'étanchéité arrière en position de montage un volume annulaire étanche entourant le pourtour extérieur de l'interface entre le moyeu de roue et le bol de transmission, par exemple de plus de 300 mm$^3$, de façon préférentielle de plus 1000 mm$^3$, et par exemple de moins de 2000 mm$^3$, de préférence de moins de 1500 mm$^3$.

Diverses configurations de la surface d'étanchéité arrière peuvent être envisagées. De préférence, au moins une des caractéristiques suivantes est réalisée :

- la surface d'étanchéité arrière ou une des surfaces d'étanchéité arrière est apte, dans la position de montage, à venir en appui radial sur un siège de joint statique arrière cylindrique formé sur le bol de transmission ;

- la surface d'étanchéité arrière ou une des surfaces d'étanchéité arrière est apte, dans la position de montage, à venir en appui axial sur un siège de joint statique arrière plan formé sur le bol de transmission ;

- la surface d'étanchéité arrière ou une des surfaces d'étanchéité arrière est apte, dans la position de montage, à venir en appui sur un siège de joint statique arrière tronconique formé sur le bol de transmission ;

- la surface d'étanchéité arrière ou une des surfaces d'étanchéité arrière est formée par une lèvre d'étanchéité apte, dans la position de montage, à venir en appui sur un siège de joint statique arrière formé sur le bol de transmission, la lèvre d'étanchéité présentant de préférence un profil convergeant orienté vers le bol de transmission.

Le ou les matériaux constitutifs du joint d'étanchéité statique doivent admettre des déformations élastiques, notamment pour l'accrochage, mais également pour la réalisation des étanchéités au niveau des surfaces d'étanchéité avant et arrière. Suivant un mode de réalisation, le joint d'étanchéité statique comporte un corps réalisé en un matériau plastique, par exemple élastomère ou thermoplastique, et formant au moins en partie la portion d'accrochage, et de préférence la surface d'étanchéité avant ou au moins une des surfaces d'étanchéité avant et/ou la surface d'étanchéité arrière ou une des surfaces d'étanchéité arrière.

Le cas échéant, on peut prévoir une armature en matériau plus rigide que le corps. On peut notamment prévoir l'une des dispositions suivantes :

- l'armature rigide est apte, dans la position de montage, à être frettée sur le bol de transmission ;

- l'armature rigide entoure la surface d'étanchéité arrière ;

- l'armature rigide entoure la portion d'accrochage ;

- l'armature rigide constitue un codeur, notamment magnétique ou optique ;

- l'armature rigide porte un codeur, notamment magnétique ou optique.

Des fonctions supplémentaires peuvent être affectées au joint d'étanchéité statique. On peut notamment prévoir que le joint d'étanchéité statique comporte :

- un dispositif de chicane faisant saillie radialement vers l'extérieur et apte à coopérer avec un élément complémentaire solidaire d'un support de roue et situé à proximité du joint d'étanchéité statique en position de montage, et/ou

- un codeur notamment magnétique ou optique.

Diverses variantes de l'étanchéité avant sont envisagées :

- la surface d'étanchéité avant ou l'une des surfaces d'étanchéité avant est formée sur la portion d'accrochage ; et/ou

- la surface d'étanchéité avant ou l'une des surfaces d'étanchéité avant est apte, dans la position de montage, à être en appui annulaire continu contre une face de la collerette tournée vers la bague intérieure de roulement ; et/ou

- la surface d'étanchéité avant ou l'une des surfaces d'étanchéité avant est apte, dans la position de montage, à être en appui annulaire continu contre une face de la collerette tournée à l'opposé de l'axe de référence.

On peut également souhaiter, avec l'étanchéité avant, protéger une interface de contact entre la bague intérieure et la collerette du moyeu de roue. Ainsi, suivant un mode de réalisation de l'invention, la surface d'étanchéité avant ou l'une des surfaces d'étanchéité avant est apte, dans la position de montage, à être en appui annulaire continu avec la bague intérieure de roulement ou sur un déflecteur ou un codeur fixé à la bague intérieure de roulement, une ou plusieurs des caractéristiques suivantes étant de préférence réalisée(s) :

- la surface d'étanchéité avant ou une des surfaces d'étanchéité avant est apte, dans la position de montage, à venir en appui radial sur un siège de joint statique avant cylindrique formé sur la bague intérieure de roulement ou sur un déflecteur ou un codeur fixé à la bague intérieure de roulement ;

- la surface d'étanchéité avant ou une des surfaces d'étanchéité avant est apte, dans la position de montage, à venir en appui axial sur un siège de joint statique avant plan formé sur la bague intérieure de roulement ou sur un déflecteur ou un codeur fixé à la bague intérieure de roulement ;

- la surface d'étanchéité avant ou une des surfaces d'étanchéité avant est apte, dans la position de montage, à venir en appui sur une arête, vive ou non, formée sur la bague intérieure de roulement ou sur un déflecteur ou un codeur fixé à la bague intérieure de roulement ;

- la surface d'étanchéité avant ou une des surfaces d'étanchéité avant est formée par une lèvre d'étanchéité avant apte, dans la position de montage, à venir en appui sur un siège de joint statique avant formé sur la bague de roulement ou sur un déflecteur ou un codeur fixé à la bague intérieure de roulement.

Naturellement, des étanchéités au niveau de la bague intérieure de roulement et de la collerette de moyeu de roue peuvent se cumuler. Ainsi, suivant une mode de réalisation, la ou les surfaces d'étanchéité avant comportent au moins une première surface d'étanchéité avant apte, dans la position de montage, à être en appuis contre un premier siège de joint statique avant formé sur la bague intérieure de roulement ou sur un déflecteur ou un codeur fixé à la bague intérieure de roulement et une deuxième surface d'étanchéité avant apte, dans la position de montage, à être en appui contre un deuxième siège de joint statique avant formé sur la collerette du moyeu de roue.

Suivant un autre aspect de l'invention, celle-ci a trait à un ensemble de moyeu de roue motrice de véhicule comportant un moyeu de roue, un bol de transmission, une bague intérieure de roulement frettée sur le moyeu de roue et retenue axialement par une collerette formant une extrémité arrière du moyeu de roue, le moyeu de roue et le bol de transmission présentant une interface ayant un pourtour extérieur annulaire à l'extrémité arrière du moyeu de roue, l'ensemble comportant en outre un joint d'étanchéité statique tel que décrit précédemment, positionné en position de montage et dont l'axe de référence est confondu avec un axe de révolution du moyeu de roue.

Suivant un mode de réalisation, le bol de transmission comporte un jeu de cannelures et de nervures radiales coopérant avec un jeu de cannelures et de nervures radiales formées sur le moyeu de roue, et situé axialement à distance de l'extrémité arrière du moyeu de roue. De préférence, le moyeu de roue comporte une surface de contact arrière annulaire plane, torique ou tronconique en contact surfacique avec une surface de contact annulaire plane, torique ou tronconique du bol de transmission, le pourtour extérieur étant formé à la périphérie extérieure de la surface de contact arrière du moyeu de roue et de la surface de contact annulaire du bol de transmission. Suivant un mode de réalisation le bol de transmission comporte un jeu de cannelures et nervures faciales coopérant avec un jeu de cannelures faciales formées à l'extrémité arrière du moyeu de roue.

Le cas échéant, le volume annulaire étanche précédemment évoqué est rempli d'un produit au moins partiellement liquide ou pâteux, par exemple un lubrifiant, ou d'un matériau à matrice polymère poreuse contenant un lubrifiant liquide ou pâteux.

Selon un autre aspect de l'invention, un procédé de montage du joint d'étanchéité statique tel que décrit ci-devant, se déroule comme suit : le manchon d'étanchéité est d'abord emmanché sur l'extension de bulbe du bol de transmission, et ensuite le bol de transmission est approché vers le moyeu de roue jusqu'à ce que l'extrémité avant du manchon d'étanchéité vienne en appuie sur la face arrière de la bague intérieure.

Selon un autre aspect de l'invention, un procédé de montage du joint d'étanchéité statique tel que décrit précédemment se déroule comme suit : la portion d'accrochage annulaire du joint d'étanchéité est d'abord fixée sur le moyeu de roue, puis le bol de transmission est approché du le moyeu de roue et emmanché dans le joint d'étanchéité.

D'autres caractéristiques et avantages de l'invention sont mis en évidence par la description ci-après d'exemples non limitatifs de réalisation des différents aspects de l'invention.

## BRÈVE DESCRIPTION DES FIGURES

La description se réfère aux figures annexées qui sont aussi données à titre d'exemples de réalisation non limitatifs de l'invention :

[Fig. 1] la figure 1 illustre une demi-vue en coupe longitudinale d'un ensemble de moyeu de roue motrice équipé d'un joint d'étanchéité statique selon un premier mode de réalisation de l'invention ;

[Fig. 2] la figure 2 illustre un détail de la figure 1 ;

[Fig. 3] la figure 3 montre une vue de détail d'un ensemble de moyeu de roue motrice équipé d'un joint d'étanchéité statique selon un deuxième mode de réalisation de l'invention ;

[Fig. 4] la figure 4 montre une vue de détail d'un ensemble de moyeu de roue motrice équipé d'un joint d'étanchéité statique selon un troisième mode de réalisation de l'invention ;

[Fig. 5] la figure 5 montre une vue de détail d'un ensemble de moyeu de roue motrice équipé d'un joint d'étanchéité statique selon un quatrième mode de réalisation de l'invention ;

[Fig. 6] la figure 6 montre une vue de détail d'un ensemble de moyeu de roue motrice équipé d'un joint d'étanchéité statique selon un cinquième mode de réalisation de l'invention ;

[Fig. 7] la figure 7 montre une vue de détail d'un ensemble de moyeu de roue motrice équipé d'un joint d'étanchéité statique selon un sixième mode de réalisation de l'invention.

Pour plus de clarté, les éléments identiques ou similaires sont repérés par des signes de référence identiques sur l'ensemble des figures.

## DESCRIPTION DÉTAILLÉE D'UN MODE DE RÉALISATION

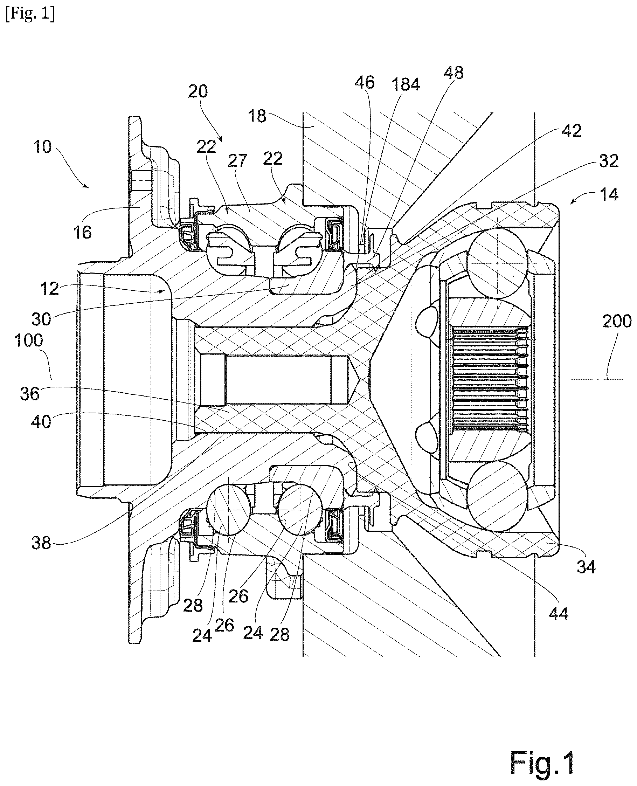

La figure 1 illustre un ensemble de moyeu de roue motrice 10 comprenant un moyeu de roue 12 et un bol de transmission 14, tous deux en acier. Le moyeu de roue 12 présente un flasque 16 de fixation d'une jante de roue et d'un disque de freins (non illustrés), et est guidé en rotation autour d'un axe de révolution 100 par rapport à un support de roue 18 par un palier à roulement 20. Le support de roue 18 est relié à une partie d'un châssis de véhicule automobile par l'intermédiaire d'une suspension (non illustré). Rappelons que par convention, on parlera d'avant et d'arrière pour désigner respectivement, le long de l'axe de révolution 100 le côté extérieur du véhicule (à gauche sur la figure 1) et le côté intérieur du véhicule (à droite sur la figure 1).

Le palier à roulement 20, illustré à titre d'exemple dans les figures, est de préférence à deux rangées 22 de corps roulants 24, ici des billes, avec deux chemins de roulement extérieurs 26 formés sur une bague de roulement extérieure unique 27, et deux chemins de roulement intérieurs 28, l'un formé ici directement sur le moyeu de roue 12, et l'autre formé sur une bague de roulement intérieure 30 rapportée sur le moyeu de roue 12, ici par frettage, et sécurisée axialement par une collerette 32 du moyeu de roue, formée par exemple par bouterollage. Suivant des variantes non illustrées, le chemin de roulement intérieur 28 avant peut être formé sur une bague de roulement rapportée. Les chemins de roulement extérieurs 26 peuvent être formés sur deux bagues de roulement distinctes. La configuration des chemins de roulement 26, 28 peut être par exemple en « O » ou en « X ». Les corps roulants 24 peuvent être des billes ou des rouleaux coniques ou cylindriques et peuvent différer, par leur taille ou leur forme, d'une rangée 22 à l'autre. Le palier à roulement 20 est de préférence équipé d'un dispositif d'étanchéité 33, qui peut le cas échéant être un joint cassette, et qui peut comporter un déflecteur 332 monté sur la bague de roulement intérieure 30, ce déflecteur pouvant le cas échéant intégrer un codeur 334, de préférence magnétique ou optique, apte à délivrer un signal de position ou de déplacement angulaire ou absolu à un capteur (non représenté) fixe par rapport au support de roue 18.

Le bol de transmission 14 est formé par un bulbe 34 prolongé vers l'avant par un nez 36. Un jeu de cannelures et de nervures radiales 38 formées sur le pourtour cylindrique du nez 36 qui sont en prise avec un jeu de cannelures et de nervures complémentaires 40 formées sur le pourtour intérieur d'un évidement tubulaire traversant ou borgne du moyeu de roue 12. Ces cannelures radiales 38 servent à transmettre un couple moteur du bol de transmission 14 au moyeu de roue 12 et à la roue motrice portée par le moyeu de roue 12.

L'extrémité arrière 42 du moyeu de roue 12 est constitué par une face arrière, de préférence plane, de la collerette 32, qui vient en appui contre un épaulement 44 correspondant du bol de transmission.

Suivant une variante non illustrée, le couple moteur peut également être transmis par coopération entre deux jeux de cannelures et de nervures faciales, formées sur la face arrière 42 de la collerette 32 et l'épaulement 44 correspondant du bol de transmission 14, qui peuvent le cas échéant remplacer les jeux de cannelures et de nervures radiales 38, 40. L'accouplement permanent en rotation entre le bol de transmission 14 et le moyeu de roue 12 peut également être réalisé par d'autres moyens. Les formes de la face arrière 42 et de la surface correspondante 44 du bol de transmission peuvent varier, et être complémentaires ou non.

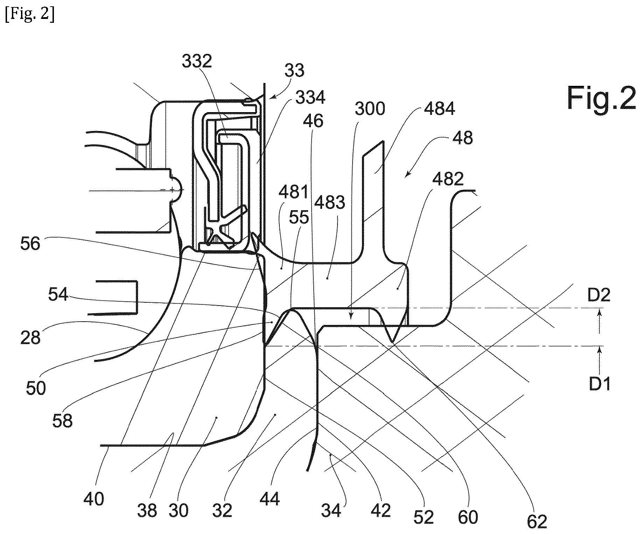

Dans toutes les configurations envisagées, l'interface de contact entre le bol de transmission 14 et le moyeu de roue 12 présente un pourtour extérieur 46, qu'il convient de protéger, selon l'invention, par un joint d'étanchéité statique 48, dont les figures 2 à 7 présentent divers exemples de réalisation.

La figure 2 illustre un premier exemple de mise en œuvre du joint d'étanchéité statique 48. Le joint d'étanchéité statique 48 présente une symétrie de révolution autour d'un axe de référence 200, qui est confondu avec l'axe de révolution 100 de l'ensemble moyeu de roue 10 lorsque le joint d'étanchéité 48 est monté. Par analogie avec l'orientation avant-arrière donnée à l'ensemble de moyeu de roue 10, on oriente le joint d'étanchéité 48 entre une extrémité avant qui, lorsque le joint d'étanchéité est monté, est tournée axialement vers les chemins de roulement intérieurs 28 et le flasque 16 du moyeu de roue 12, et une extrémité arrière qui, lorsque le joint d'étanchéité est monté, est tournée vers le bulbe 34 du bol de transmission 14. Avec cette orientation, le joint d'étanchéité statique 48 présente une portion avant 481, une portion arrière 482 et une portion intermédiaire 483 de liaison entre portion avant 481 et portion arrière 482.

De façon remarquable, la portion avant 481 du joint d'étanchéité statique 48 comporte une portion d'accrochage 50 annulaire élastiquement déformable en saillie radialement vers l'axe de référence 200 et positionnée, dans la position de montage, axialement et radialement entre une face transversale 52 de la bague intérieure de roulement 30 et une face 54 de la collerette 32 tournée vers la bague intérieure de roulement 30 en réalisant un accrochage élastique du joint d'étanchéité statique 48 au moyeu de roue 12.

Pour donner un ordre de grandeur de la saillie radiale constituée par la portion d'accrochage 50, on peut comparer la plus courte distance D1 entre l'axe de référence 200 et la portion d'accrochage 50 , à la plus courte distance D2 entre l'axe de référence 200 et une portion de transition 55 du joint d'étanchéité statique 48 directement adjacente à la portion d'accrochage 50 vers l'arrière, et destinée à recouvrir, avec ou de préférence sans contact, la partie de la collerette 32 la plus éloignée de l'axe de référence. Pour assurer un bon accrochage, on choisira de préférence D2-D1>2mm, voire D2-D1>5mm. Pour ne pas entraver le montage, on choisira de préférence D2-D1<10mm, et en pratique D2-D1<8mm.

L'élasticité du joint d'étanchéité statique 48 permet d'amener la portion d'accrochage 50 en position de montage par mouvement axial du joint d'étanchéité statique 48 vers l'avant et par effacement élastique de la portion d'accrochage 50 qui s'éloigne de l'axe de référence 200 en passant la collerette 32 du moyeu de roue 12.

La portion avant comporte dans cet exemple trois surfaces d'étanchéité avant destinées à venir en appui chacune contre un siège de joint statique réalisé sur la bague intérieure de roulement 30 ou sur la collerette 32 du moyeu de roue 12. Une première surface d'étanchéité 56 est réalisée par une lèvre d'étanchéité qui vient en contact quasi-linéaire avec un rebord de la bague intérieure 30 de roulement et/ou qui peut le cas échéant venir en contact quasi-linéaire avec le déflecteur 332 ou le codeur 334 du dispositif d'étanchéité 33alors que les deux autres surfaces d'étanchéité 58, 60 sont en contact surfacique l'une avec la bague intérieure de roulement 30 (contact plan) et l'autre avec la collerette 32 (contact tronconique).

La portion arrière comporte dans cet exemple une lèvre d'étanchéité 62 qui, en position de montage, vient en appui sur un siège de joint statique cylindrique réalisé sur le bol de transmission 14.

En position de montage, la portion intermédiaire 483 délimite avec la surface d'étanchéité avant 60 et la surface d'étanchéité arrière 62 un volume annulaire étanche 300 entourant le pourtour extérieur 46 de l'interface entre le moyeu de roue 12 et le bol de transmission 14. Ce volume est de préférence supérieur à 500 mm$^3$ et inférieur à 2000 mm$^3$. Il peut le cas échéant être rempli d'un produit au moins partiellement liquide ou pâteux, par exemple un lubrifiant, ou d'un matériau à matrice polymère poreuse contenant un lubrifiant liquide ou pâte, dans le but de retarder l'oxydation de l'interface, au niveau de la face arrière 42 du moyeu de roue 12 et de l'épaulement 44 du bol de transmission 14, voire au-delà, dans l'hypothèse ou l'oxydation se propagerait depuis le pourtour extérieur 46 vers les cannelures radiales 38, 40.

La portion intermédiaire 483 comporte ici un manchon et une collerette 484 faisant saillie radialement vers l'extérieur et destinée à coopérer avec un élément complémentaire 184 (figure 1) fixe par rapport au support de roue 18 et situé à proximité du joint d'étanchéité statique 48 pour réaliser un chicanage et le cas échéant une étanchéité dynamique sans contact. Suivant des variantes non illustrée, la localisation de la collerette 484 peut être différente, et celle-ci peut s'implanter le cas échéant aussi bien dans la portion arrière 482 que dans la portion avant 481 du joint d'étanchéité 48.

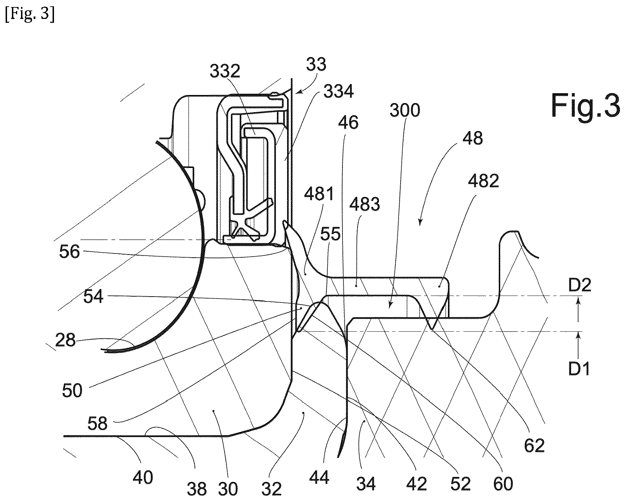

Le joint d'étanchéité 48 du mode de réalisation de la figure 3 diffère du précédent essentiellement par l'absence de collerette de chicanage, et par la diminution de l'épaisseur de la portion intermédiaire 483, qui forme un manchon ayant une faible raideur en flexion et en torsion, ce qui permet de découpler la portion avant 481 de la portion arrière 482 du joint d'étanchéité 48, de sorte que les micro-déplacements dynamiques relatifs entre le bol de transmission 14 et le moyeu de roue 12 ne se traduisent pas par des efforts trop importants au niveau des surfaces d'étanchéité avant 56, 58, 60 et arrière 62.

Dans ce mode de réalisation, le joint d'étanchéité statique 48 est constitué intégralement d'un corps monobloc sans insert.

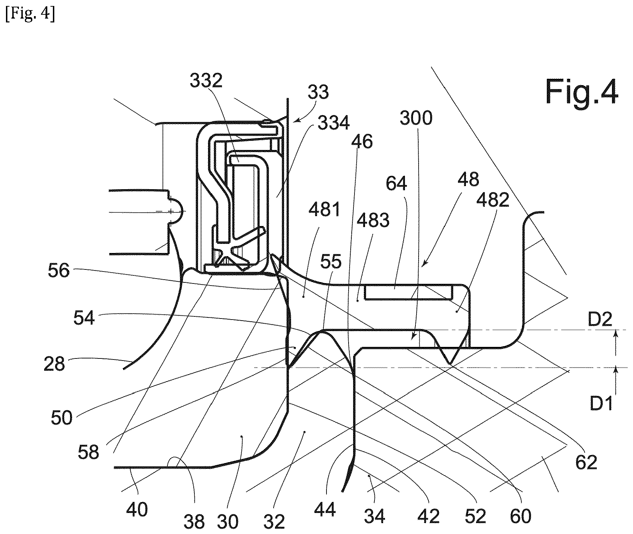

Le joint d'étanchéité 48 illustré sur la figure 4 diffère des précédents par l'adjonction d'un anneau codeur notamment magnétique ou optique 64 affleurant à la surface extérieure du corps du joint d'étanchéité 48. Le signal fourni par ce codeur est destiné à être lu par un capteur solidaire d'une partie non tournante, en particulier du support de roue 18, et à livrer par exemple une information d'angle ou de déplacement angulaire relatif ou absolu du moyeu de roue.

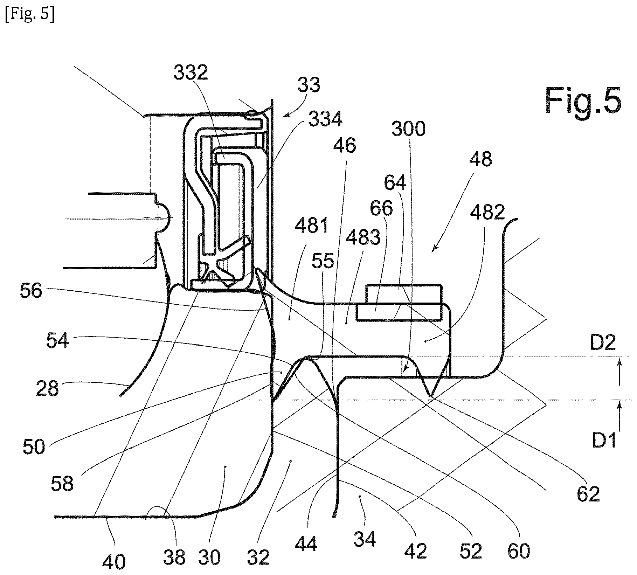

Le joint d'étanchéité illustré sur la figure 5 diffère du précédent par la superposition d'un anneau codeur 64 porté par le joint d'étanchéité statique et d'un insert de renfort 66 noyé dans le corps élastomère du joint d'étanchéité statique. La fonction de maintien assurée par l'insert 66 est découplée de la fonction de codage de l'information angulaire réalisée par le codeur 64 ce qui permet le cas échéant de réaliser le codeur en un matériau plus souple que l'insert de renfort 66.

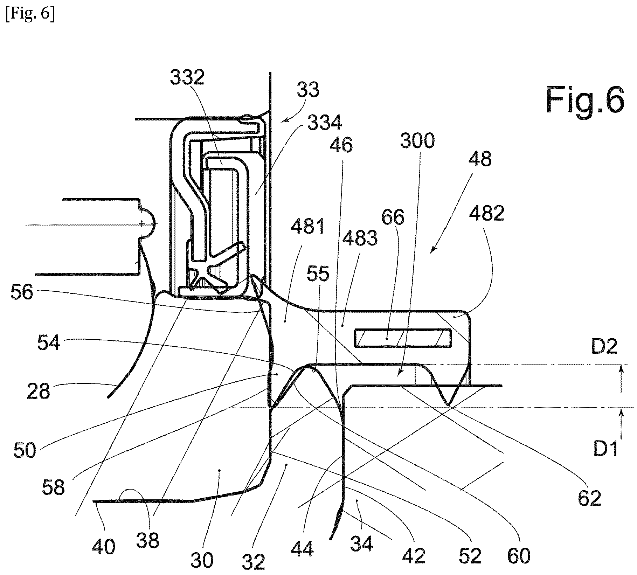

Le joint d'étanchéité illustré sur la figure 6 diffère des précédents par l'adjonction d'une armature rigide 66, de préférence annulaire, de renfort, noyée dans le corps élastomère du joint d'étanchéité 48, et située axialement à distance de la portion d'accrochage 50.

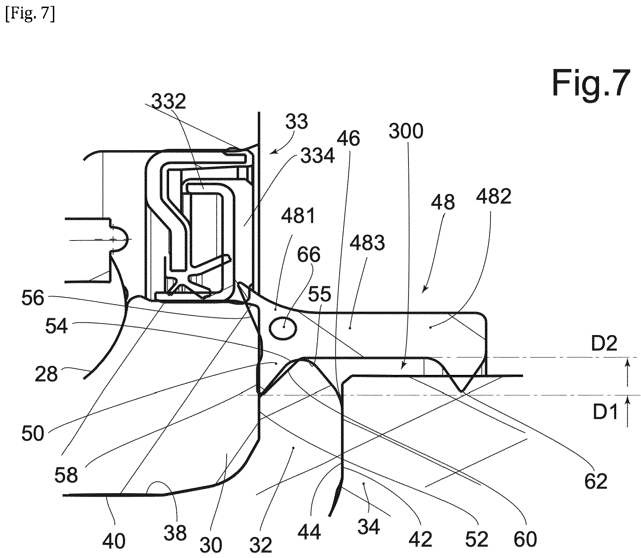

Le joint d'étanchéité illustré sur la figure 7 diffère du précédent par le positionnement de l'armature de renfort 66, qui entoure la portion d'accrochage 50.

Selon le type de propulsion d'un véhicule automobile, l'ensemble de moyeu de roue motrice 10 est installé sur le train avant pour un véhicule à traction, le train arrière pour un véhicule à propulsion, ou sur les deux trains de roues pour un véhicule automobile à traction intégrale.

Comme indiqué dans la description qui précède, les différents aspects de l'invention peuvent-être mis en œuvre selon le contexte dans des variantes de configuration différentes de celles décrites ci-dessus. Par exemple, les cannelures permettant la transmission du couple moteur à la partie rotative du moyeu de roue peuvent être radiales faciales, tronconiques, ou une combinaison de ces réalisations.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

**Revendications**

1. Joint d'étanchéité statique (48) annulaire pour un ensemble de moyeu de roue motrice (10) comportant un moyeu de roue (12), un bol de transmission (14) et une bague intérieure de roulement (30) frettée sur le moyeu de roue (12) et maintenue axialement par une collerette (32) formant une extrémité arrière (42) du moyeu de roue (12), le joint d'étanchéité statique (48) définissant un axe de référence (200) et étant apte, dans une position de montage, à couvrir un pourtour extérieur annulaire (46) d'une interface entre le moyeu de roue (12) et le bol de transmission (14) située à l'extrémité arrière (46) du moyeu de roue (12), le joint d'étanchéité statique (48) comprenant au moins une surface d'étanchéité arrière (62) apte, dans la position de montage, à être en appui annulaire continu sur un siège de joint statique arrière formé sur le bol de transmission (14), et au moins une surface d'étanchéité avant (56, 58, 60) apte, dans la position de montage, à être en appui annulaire continu sur un siège de joint statique avant formé sur la collerette (32) du moyeu de roue (12), sur la bague intérieure de roulement (30) ou sur un déflecteur (331) ou un codeur fixé à la bague intérieure de roulement (30), **caractérisé en ce qu'**il comporte une portion d'accrochage (50) annulaire élastiquement déformable en saillie radialement vers l'axe de référence (200), apte à être amenée en position de montage par mouvement axial du joint d'étanchéité statique (48) vers la bague intérieure de roulement (30) et par effacement élastique de la portion d'accrochage (50) au passage de la collerette (32) du moyeu de roue (12), et à être positionnée, dans la position de montage, axialement entre une face transversale (52) de la bague intérieure de roulement (30) et une face (54) de la collerette (32) du moyeu de roue (12) tournée vers la bague intérieure de roulement (30) en réalisant un accrochage élastique du joint d'étanchéité statique (48) au moyeu de roue (12).

2. Joint d'étanchéité statique (48) selon la revendication 1, **caractérisé en ce qu'**avant montage, l'axe de référence est situé à une distance D1 de la portion d'accrochage (50) et à une distance D2 d'une portion de transition du joint d'étanchéité statique, destinée à être positionnée, dans la position de montage, radialement en regard d'une partie de la collerette (32) du moyeu de roue (12) la plus éloignée de l'axe de référence (200), et **en ce qu'**une ou plusieurs des caractéristiques dimensionnelles suivantes sont réalisées :

   -

   $$D2-D1>2mm$$

   -

   $$D2-D1>5mm$$

   -

   $$D2-D1<8mm$$

   -

   $$D2-D1<10mm.$$

3. Joint d'étanchéité statique (48) selon l'une quelconque des revendications précédentes, **caractérisé en ce que** le joint d'étanchéité statique (48) comprend une portion intermédiaire (483) reliant la portion d'accrochage (50) et la surface d'étanchéité arrière (62) ou l'une des surfaces d'étanchéité arrière, et apte, dans la position de montage, à couvrir le pourtour extérieur (46) de l'interface entre le moyeu de roue (12) et le bol de transmission (14).

4. Joint d'étanchéité statique (48) selon la revendication 3, **caractérisé en ce que** la portion intermédiaire (483) délimite avec la surface d'étanchéité avant (60) ou l'une des surfaces d'étanchéité avant et la surface d'étanchéité arrière (62) ou l'une des surfaces d'étanchéité arrière en position de montage un volume annulaire étanche (300) entourant le pourtour extérieur (46) de l'interface entre le moyeu de roue (12) et le bol de transmission (14), par exemple de plus de 300 mm$^3$, de façon préférentielle de plus 1000 mm$^3$, et par exemple de moins de 2000 mm$^3$, de préférence de moins de 1500 mm$^3$.

5. Joint d'étanchéité statique (48) selon l'une quelconque des revendications précédentes, **caractérisé en ce qu'**au moins une des caractéristiques suivantes est réalisée :

   - la surface d'étanchéité arrière (62) ou une des surfaces d'étanchéité arrière est apte, dans la position de montage, à venir en appui radial sur un siège de joint statique arrière cylindrique formé sur le bol de transmission (14) ;
   - la surface d'étanchéité arrière (62) ou une des surfaces d'étanchéité arrière est apte, dans la position de montage, à venir en appui axial sur un siège de joint statique arrière plan formé sur le bol de transmission (14) ;
   - la surface d'étanchéité arrière (62) ou une des surfaces d'étanchéité arrière est apte, dans la position de montage, à venir en appui sur un siège de joint statique arrière tronconique formé sur le bol de transmission (14) ;
   - la surface d'étanchéité arrière (62) ou une des surfaces d'étanchéité arrière est formée par une lèvre d'étanchéité (62) apte, dans la position de montage, à venir en appui sur un siège de joint statique arrière formé sur le bol de transmission (14), la lèvre d'étanchéité (62) présentant de préférence un profil convergeant orienté vers le bol de transmission (14).

6. Joint d'étanchéité statique (48) selon l'une des revendications précédentes, **caractérisé en ce que** le joint d'étanchéité statique (48) comporte un corps réalisé en un matériau plastique, par exemple élastomère ou thermoplastique, et formant au moins en partie la portion d'accrochage (50), et de préférence la surface d'étanchéité avant (56, 58, 60) ou au moins une des surfaces d'étanchéité avant (56, 58, 60) et/ou la surface d'étanchéité arrière (62) ou une des surfaces d'étanchéité arrière.

7. Joint d'étanchéité statique selon la revendication 6, **caractérisé en ce qu'**il comprend en outre une armature (66) en matériau plus rigide que le corps, l'une au moins des caractéristiques suivantes étant de préférence réalisée :

   - l'armature rigide (66) est apte, dans la position de montage, à être frettée sur le bol de transmission ;
   - l'armature rigide (66) entoure la surface d'étanchéité arrière (62) ;
   - l'armature rigide (66) entoure la portion d'accrochage (50) ;
   - l'armature rigide (66) constitue un codeur, notamment magnétique ou optique (64) ;
   - l'armature rigide (66) porte un codeur, notamment magnétique ou optique (64).

8. Joint d'étanchéité statique (48) selon l'une des revendications précédentes, **caractérisé en ce que** le joint d'étanchéité statique comporte :

   - un dispositif de chicane (484) faisant saillie radialement vers l'extérieur et apte à coopérer avec un élément complémentaire (184) solidaire d'un support de roue (18) et situé à proximité du joint d'étanchéité statique (48) en position de montage, et/ou
   - un codeur (64) notamment magnétique ou optique.

9. Joint d'étanchéité statique (48) selon l'une quelconque des revendications précédentes, **caractérisé en ce que**

   - la surface d'étanchéité avant (56, 58, 60) ou l'une des surfaces d'étanchéité avant est formée sur la portion d'accrochage ; et/ou
   - la surface d'étanchéité avant (56, 58, 60) ou l'une des surfaces d'étanchéité avant est apte, dans la position de montage, à être en appui annulaire continu contre une face (54) de la collerette (32) tournée vers la bague intérieure de roulement (30) ; et/ou
   - la surface d'étanchéité avant (56, 58, 60) ou l'une des surfaces d'étanchéité avant est apte, dans la position de montage, à être en appui annulaire continu contre une face (54) de la collerette (32) tournée à l'opposé de l'axe de référence (200).

10. Joint d'étanchéité statique (48) selon l'une quelconque des revendications précédentes, **caractérisé en ce que** la surface d'étanchéité avant (56, 58, 60) ou l'une des surfaces d'étanchéité avant est apte, dans la position de montage, à être en appui annulaire continu avec la bague intérieure de roulement (30) ou sur un déflecteur (332) ou un codeur (334) fixé à la bague intérieure de roulement (30), une ou plusieurs des caractéristiques suivantes étant de préférence réalisée(s) :

   - la surface d'étanchéité avant (56, 58, 60) ou une des surfaces d'étanchéité avant est apte, dans la position de montage, à venir en appui radial sur un siège de joint statique avant cylindrique formé sur la bague intérieure de roulement (30) ou sur un déflecteur (332) ou un codeur (334) fixé à la bague intérieure de roulement (30) ;
   - la surface d'étanchéité avant (56, 58, 60) ou une des surfaces d'étanchéité avant est apte, dans la position de montage, à venir en appui axial sur un siège de joint statique avant plan formé sur la bague intérieure de roulement (30) ou sur un déflecteur (332) ou un codeur (334) fixé à la bague intérieure de roulement (30) ;
   - la surface d'étanchéité avant (56, 58, 60) ou une des surfaces d'étanchéité avant est apte, dans la position de montage, à venir en appui sur une arête, vive ou non, formée sur la bague intérieure de roulement (30) ou sur un déflecteur (332) ou un codeur (334) fixé à la bague intérieure de roulement (30) ;
   - la surface d'étanchéité avant (56, 58, 60) ou une des surfaces d'étanchéité avant est formée par une lèvre d'étanchéité avant apte, dans la position de montage, à venir en appui sur un siège de joint statique avant formé sur la bague de roulement (30) ou sur un déflecteur (332) ou un codeur (334) fixé à la bague intérieure de roulement (30).

11. Joint d'étanchéité statique (48) selon l'une quelconque des revendications précédentes, **caractérisé en ce que** la ou les surfaces d'étanchéité avant (56, 58, 60) comportent au moins une première surface d'étanchéité avant (56, 58) apte, dans la position de montage, à être en appuis contre un premier siège de joint statique avant formé sur la bague intérieure de roulement (30) ou sur un déflecteur (332) ou un codeur (334) fixé à la bague intérieure de roulement (30) et une deuxième surface d'étanchéité avant (60) apte, dans la position de montage, à être en appui contre un deuxième siège de joint statique avant formé sur la collerette (32) du moyeu de roue (12).

12. Ensemble de moyeu de roue motrice (10) de véhicule comportant un moyeu de roue (12), un bol de transmission (14), une bague intérieure de roulement (30) frettée sur le moyeu de roue (12) et retenue axialement par une collerette (32) formant une extrémité arrière (42) du moyeu de roue (12), le moyeu de roue (12) et le bol de transmission (14) présentant une interface ayant un pourtour extérieur annulaire (46) à l'extrémité arrière (42) du moyeu de roue (12), **caractérisé en ce qu'**il comporte en outre un joint d'étanchéité statique (48) selon l'une quelconque des revendications précédentes, positionné en position de montage et dont l'axe de référence (200) est confondu avec un axe de révolution (100) du moyeu de roue (10).

13. Ensemble de moyeu de roue motrice (10) de véhicule selon la revendication 12, **caractérisé en ce que** le bol de transmission (14) comporte un jeu de cannelures et de nervures radiales (38) coopérant avec un jeu de cannelures et de nervures radiales (40) formées sur le moyeu de roue (12), et situé axialement à distance de l'extrémité arrière (42) du moyeu de roue (12).

14. Ensemble de moyeu de roue motrice (10) de véhicule selon la revendication 13, **caractérisé en ce que** le moyeu de roue (12) comporte une surface de contact arrière (42) annulaire plane, torique ou tronconique en contact surfacique avec une surface de contact annulaire plane, torique ou tronconique (44) du bol de transmission (14), le pourtour extérieur (46) étant formé à la périphérie extérieure de la surface de contact arrière (42) du moyeu de roue (12) et de la surface de contact annulaire (44) du bol de transmission (14).

15. Ensemble de moyeu de roue motrice (10) de véhicule selon l'une quelconque des revendications 12 à 14, **caractérisé en ce que** le bol de transmission (14) comporte un jeu de cannelures et nervures faciales coopérant avec un jeu de cannelures faciales formées à l'extrémité arrière (42) du moyeu de roue (12).

16. Ensemble de moyeu de roue motrice (10) de véhicule selon l'une quelconque des revendications 12 à 15, le joint d'étanchéité statique (48) étant selon la revendication 4, **caractérisé en ce que** le volume annulaire étanche (300) est rempli d'un produit au moins partiellement liquide ou pâteux, par exemple un lubrifiant, ou d'un matériau à matrice polymère poreuse contenant un lubrifiant liquide ou pâteux.

**Patentansprüche**

1. Ringförmige statische Dichtung (48) für eine Antriebsradnabenanordnung (10) mit einer Radnabe (12), einem Getriebegehäuse (14) und einem inneren Laufring (30), der auf die Radnabe (12) aufgeschrumpft ist und axial durch einen Flansch (32) gehalten wird, der ein hinteres Ende (42) der Radnabe (12) bildet, wobei die statische Dichtung (48) eine Bezugsachse (200) definiert und in einer Montageposition in der Lage ist, einen ringförmigen Außenumfang (46) einer Schnittstelle zwischen der Radnabe (12) und dem Getriebegehäuse (14) abzudecken, die sich an dem hinteren Ende (46) der Radnabe (12) befindet, wobei die statische Dichtung (48) mindestens eine hintere Dichtungsfläche (62), die in der Montageposition in der Lage ist, kontinuierlich ringförmig an einem hinteren statischen Dichtungssitz anzuliegen, der auf dem Getriebegehäuse (14) ausgebildet ist, und mindestens eine vordere Dichtungsfläche (56, 58, 60) umfasst, die in der Montageposition in der Lage ist, kontinuierlich ringförmig an einem vorderen statischen Dichtungssitz anzuliegen, der auf dem Flansch (32) der Radnabe (12), auf dem inneren Lagerring (30) oder auf einem an dem inneren Lagerring (30) befestigten Deflektor (331) oder Codierer ausgebildet ist,
**dadurch gekennzeichnet, dass** sie einen ringförmigen, elastisch verformbaren, radial zur Bezugsachse (200) vorstehenden Verhakungsabschnitt (50) umfasst, der in der Lage ist, durch axiale Bewegung der statischen Dichtung (48) in Richtung des inneren Laufrings (30) und durch elastisches Zurückweichen des Verhakungsabschnitts (50) beim Durchgang durch den Flansch (32) der Radnabe (12) in die Montageposition gebracht zu werden, und in der Montageposition axial zwischen einer Querfläche (52) des inneren Laufrings (30) und einer dem inneren Laufring (30) zugewandten Seite (54) des Flansches (32) der Radnabe (12) positioniert zu werden, indem eine elastische Verhakung der statischen Dichtung (48) mit der Radnabe (12) hergestellt wird.

2. Statische Dichtung (48) nach Anspruch 1, **dadurch gekennzeichnet, dass** vor der Montage die Bezugsachse in einem Abstand D1 von dem Verhakungsabschnitt (50) und in einem Abstand D2 von einem Übergangsabschnitt der statischen Dichtung angeordnet ist, dazu bestimmt ist, in der Montageposition radial gegenüber einem Teil des Flansches (32) der Radnabe (12) positioniert zu werden, der am weitesten von der Bezugsachse (200) entfernt ist, und dadurch, dass eines oder mehrere der folgenden Abmessungsmerkmale hergestellt werden:

- 

$$D2-D1>2 \text{ mm}$$

- 

$$D2-D1>5 \text{ mm}$$

- 

$$D2-D1<8 \text{ mm}$$

- 

$$D2-D1<10 \text{ mm.}$$

3. Statische Dichtung (48) nach einem der vorstehenden Ansprüche, **dadurch gekennzeichnet, dass** die statische Dichtung (48) einen Zwischenabschnitt (483) umfasst, der den Verhakungsabschnitt (50) und die hintere Dichtungsfläche (62) oder eine der hinteren Dichtungsflächen verbindet und in der Montageposition in der Lage ist, den Außenumfang (46) der Schnittstelle zwischen der Radnabe (12) und dem Getriebegehäuse (14) abzudecken.

4. Statische Dichtung (48) nach Anspruch 3, **dadurch gekennzeichnet, dass** der Zwischenabschnitt (483) mit der vorderen Dichtungsfläche (60) oder einer der vorderen Dichtungsflächen und der hinteren Dichtungsfläche (62) oder einer der hinteren Dichtungsflächen in der Montageposition ein den Außenumfang (46) der Schnittstelle zwischen der Radnabe (12) und dem Getriebegehäuse (14) umgebendes ringförmiges Dichtungsvolumen (300) abgrenzt, zum Beispiel von mehr als 300 mm³, vorzugsweise von mehr als 1000 mm³, und zum Beispiel von weniger als 2000 mm³, vorzugsweise von weniger als 1500 mm³.

5. Statische Dichtung (48) nach einem der vorstehenden Ansprüche, **dadurch gekennzeichnet, dass** mindestens eines der folgenden Merkmale ausgeführt wird:

- die hintere Dichtungsfläche (62) oder eine der hinteren Dichtungsflächen ist in der Montageposition in der Lage, radial auf einem zylindrischen hinteren statischen Dichtungssitz anzuliegen, der auf dem Getriebegehäuse (14) ausgebildet ist;
- die hintere Dichtungsfläche (62) oder eine der hinteren Dichtungsflächen ist in der Montageposition in der Lage, axial auf einem ebenen hinteren statischen Dichtungssitz anzuliegen, der auf dem Getriebegehäuse (14) ausgebildet ist;
- die hintere Dichtungsfläche (62) oder eine der hinteren Dichtungsflächen ist in der Montageposition in der Lage, auf einem kegelstumpfförmigen hinteren statischen Dichtungssitz anzuliegen, der auf dem Getriebegehäuse (14) ausgebildet ist;
- die hintere Dichtungsfläche (62) oder eine der hinteren Dichtungsflächen wird durch eine Dichtungslippe (62) gebildet, die in der Montageposition in der Lage ist, an einem hinteren statischen Dichtungssitz anzuliegen, der auf dem Getriebegehäuse (14) ausgebildet ist, wobei die Dichtungslippe (62) vorzugsweise ein konvergierendes Profil aufweist, das in Richtung des Getriebegehäuses (14) ausgerichtet ist.

6. Statische Dichtung (48) nach einem der vorstehenden Ansprüche, **dadurch gekennzeichnet, dass** die statische Dichtung (48) einen Körper aufweist, der aus einem Kunststoffmaterial, zum Beispiel Elastomer oder Thermoplast, ausgeführt ist und mindestens teilweise den Verhakungsabschnitt (50) und vorzugsweise die vordere Dichtungsfläche (56, 58, 60) oder mindestens eine der vorderen Dichtungsflächen (56, 58, 60) und/oder die hintere Dichtungsfläche (62) oder eine der hinteren Dichtungsflächen bildet.

7. Statische Dichtung nach Anspruch 6, **dadurch gekennzeichnet, dass** sie ferner einen Beschlag (66) aus einem Material umfasst, das starrer ist als der Körper, wobei mindestens eines der folgenden Merkmale vorzugsweise ausgeführt wird:

- der starre Beschlag (66) ist in der Montageposition in der Lage, auf das Getriebegehäuse aufgeschrumpft zu werden;
- der starre Beschlag (66) umgibt die hintere Dichtungsfläche (62);
- der starre Beschlag (66) umgibt den Verhakungsabschnitt (50);
- der starre Beschlag (66) bildet einen Codierer, insbesondere einen magnetischen oder optischen (64);
- der starre Beschlag (66) trägt einen Codierer, insbesondere einen magnetischen oder optischen (64).

8. Statische Dichtung (48) nach einem der vorstehenden Ansprüche, **dadurch gekennzeichnet, dass** die statische Dichtung Folgendes aufweist:

- eine Ablenkvorrichtung (484), die radial nach außen vorsteht und in der Lage ist, mit einem komplementären Element (184) zusammenzuwirken, das fest mit einem Radträger (18) verbunden ist und sich in der Montageposition in der Nähe der statischen Dichtung (48) befindet, und/oder

- einen Codierer (64), insbesondere einen magnetischen oder optischen.

9. Statische Dichtung (48) nach einem der vorstehenden Ansprüche, **dadurch gekennzeichnet, dass**

- die vordere Dichtungsfläche (56, 58, 60) oder eine der vorderen Dichtungsflächen auf dem Verhakungsabschnitt ausgebildet ist; und/oder
- die vordere Dichtungsfläche (56, 58, 60) oder eine der vorderen Dichtungsflächen in der Montageposition in der Lage ist, kontinuierlich ringförmig an einer Seite (54) des Flansches (32) anzuliegen, die dem inneren Laufring (30) zugewandt ist; und/oder
- die vordere Dichtungsfläche (56, 58, 60) oder eine der vorderen Dichtungsflächen in der Montageposition in der Lage ist, kontinuierlich ringförmig an einer Seite (54) des Flansches (32) anzuliegen, die von der Bezugsachse (200) weggewandt ist.

10. Statische Dichtung (48) nach einem der vorstehenden Ansprüche, **dadurch gekennzeichnet, dass** die vordere Dichtungsfläche (56, 58, 60) oder eine der vorderen Dichtungsflächen in der Montageposition in der Lage ist, kontinuierlich ringförmig auf dem inneren Laufring (30) oder auf einem an dem inneren Laufring (30) befestigten Deflektor (332) oder Codierer (334) anzuliegen, wobei vorzugsweise eines oder mehrere der folgenden Merkmale ausgeführt wird/werden:

- die vordere Dichtungsfläche (56, 58, 60) oder eine der vorderen Dichtungsflächen ist in der Montageposition in der Lage, radial auf einem zylindrischen vorderen statischen Dichtungssitz anzuliegen, der auf dem inneren Laufring (30) oder auf einem Deflektor (332) oder einem Codierer (334), der an dem inneren Laufring (30) befestigt ist, ausgebildet ist;
- die vordere Dichtungsfläche (56, 58, 60) oder eine der vorderen Dichtungsflächen ist in der Montageposition in der Lage, axial auf einem ebenen vorderen statischen Dichtungssitz anzuliegen, der auf dem inneren Laufring (30) oder auf einem Deflektor (332) oder einem Codierer (334), der an dem inneren Laufring (30) befestigt ist, ausgebildet ist;
- die vordere Dichtungsfläche (56, 58, 60) oder eine der vorderen Dichtungsflächen ist in der Montageposition in der Lage, auf einer scharfen oder nicht scharfen Kante anzuliegen, die auf dem inneren Laufring (30) oder auf einem Deflektor (332) oder einem Codierer (334), der an dem inneren Laufring (30) befestigt ist, ausgebildet ist;
- die vordere Dichtungsfläche (56, 58, 60) oder eine der vorderen Dichtungsflächen ist durch eine vordere Dichtungslippe gebildet, die in der Montageposition in der Lage ist, auf einem vorderen statischen Dichtungssitz anzuliegen, der auf dem inneren Laufring (30) oder auf einem Deflektor (332) oder einem Codierer (334), der an dem inneren Laufring (30) befestigt ist, ausgebildet ist.

11. Statische Dichtung (48) nach einem der vorstehenden Ansprüche, **dadurch gekennzeichnet, dass** die vordere(n) Dichtungsfläche(n) (56, 58, 60) mindestens eine erste vordere Dichtungsfläche (56, 58) aufweist (aufweisen), die in der Montageposition in der Lage ist, an einem ersten vorderen statischen Dichtungssitz, der auf dem inneren Laufring (30) oder auf einem Deflektor (332) oder einem Codierer (334) ausgebildet ist, der an dem inneren Laufring (30) befestigt ist, anzuliegen, und eine zweite vordere Dichtungsfläche (60), die in der Montageposition in der Lage ist, an einem zweiten vorderen statischen Dichtungssitz anzuliegen, der auf dem Flansch (32) der Radnabe (12) ausgebildet ist.

12. Antriebsradnabenanordnung (10) eines Fahrzeugs mit einer Radnabe (12), einem Getriebegehäuse (14), einem inneren Laufring (30), der auf die Radnabe (12) aufgeschrumpft ist und axial durch einen Flansch (32) gehalten wird, der ein hinteres Ende (42) der Radnabe (12) bildet, wobei die Radnabe (12) und das Getriebegehäuse (14) eine Schnittstelle mit einem ringförmigen Außenumfang (46) am hinteren Ende (42) der Radnabe (12) aufweisen, **dadurch gekennzeichnet, dass** sie ferner eine statische Dichtung (48) nach einem der vorstehenden Ansprüche aufweist, die in der Montageposition positioniert ist und deren Bezugsachse (200) mit einer Drehachse (100) der Radnabe (10) zusammenfällt.

13. Antriebsradnabenanordnung (10) eines Fahrzeugs nach Anspruch 12, **dadurch gekennzeichnet, dass** das Getriebegehäuse (14) einen Satz von Keilnuten und radialen Rippen (38) aufweist, die mit einem Satz von Keilnuten und radialen Rippen (40) zusammenwirken, die auf der Radnabe (12) ausgebildet sind, und axial in einem Abstand von dem hinteren Ende (42) der Radnabe (12) angeordnet sind.

14. Antriebsradnabenanordnung (10) eines Fahrzeugs nach Anspruch 13, **dadurch gekennzeichnet, dass** die Radnabe (12) eine ebene, ringförmige, torische oder kegelstumpfförmige hintere Kontaktfläche (42) aufweist, die in flächiger Berührung mit einer ebenen, ringförmigen, torischen oder kegelstumpfförmigen Kontaktfläche (44) des Getriebegehäuses (14) steht, wobei der Außenumfang (46) am äußeren Umfang der hinteren Kontaktfläche (42) der Radnabe (12) und der ringförmigen Kontaktfläche (44) des Getriebegehäuses (14) ausgebildet ist.

15. Antriebsradnabenanordnung (10) eines Fahrzeugs nach einem der Ansprüche 12 bis 14, **dadurch gekennzeichnet, dass** das Getriebegehäuse (14) einen Satz von fazialen Keilnuten und Rippen aufweist, die mit einem Satz von fazialen Keilnuten zusammenwirken, die am hinteren Ende (42) der Radnabe (12) ausgebildet sind.

16. Antriebsradnabenanordnung (10) eines Fahrzeugs nach einem der Ansprüche 12 bis 15, wobei die statische Dichtung (48) nach Anspruch 4 ist, **dadurch gekennzeichnet, dass** das ringförmige Dichtungsvolumen (300) mit einem zumindest teilweise flüssigen oder pastösen Produkt, zum Beispiel einem Schmiermittel, oder mit einem Material mit poröser Polymermatrix, das ein flüssiges oder pastöses Schmiermittel enthält, gefüllt ist.


**Claims**

1. Annular static seal (48) for a drive wheel hub assembly (10) including a wheel hub (12), a torque converter (14) and an inner race ring (30) shrunk onto the wheel hub (12) and held axially by a flange (32) forming a rear end (42) of the wheel hub (12), the static seal (48) defining a reference axis (200) and being capable, in a mounting position, of covering an annular outer perimeter (46) of an interface between the wheel hub (12) and the torque converter (14) located at the rear end (46) of the wheel hub (12), the static seal (48) comprising at least one rear sealing surface (62) which is capable, in the mounting position, of continuously annularly bearing against a rear static seal seat formed on the torque converter (14), and at least one front sealing surface (56, 58, 60) which is capable, in the mounting position, of continuously annularly bearing against a front static seal seat formed on the flange (32) of the wheel hub (12), on the inner race ring (30) or on a deflector (331) or an encoder attached to the inner race ring (30), **characterized in that** it includes a resiliently deformable annular fastening portion (50) projecting radially toward the reference axis (200) and capable of being moved into the mounting position by axial movement of the static seal (48) toward the inner race ring (30) and by resilient retraction of the fastening portion (50) when passing the flange (32) of the wheel hub (12), and capable of being positioned, in the mounting position, axially between a transverse face (52) of the inner race ring (30) and a face (54) of the flange (32) of the wheel hub (12) facing toward the inner race ring (30) producing a resilient fastening of the static seal (48) to the wheel hub (12).

2. Static seal (48) according to claim 1, **characterized in that** before mounting, the reference axis is located at a distance D1 from the fastening portion (50) and at a distance D2 from a transition portion of the static seal, the transition portion being intended to be positioned, in the mounting position, radially opposite a part of the flange (32) of the wheel hub (12) furthest from the reference axis (200), and **in that** one or more of the following dimensional features are produced:

    - 
$$D2-D1>2 \text{ mm}$$

    - 
$$D2-D1>5 \text{ mm}$$

    - 
$$D2-D1<8 \text{mm}$$

    - 
$$D2-D1<10 \text{ mm}.$$

3. Static seal (48) according to any one of the preceding claims, **characterized in that** the static seal (48) comprises an intermediate portion (483) connecting the fastening portion (50) and the rear sealing surface (62) or one of the rear sealing surfaces, and is capable, in the mounting position, of covering the outer perimeter (46) of the interface between the wheel hub (12) and the torque converter (14).

4. Static seal (48) according to claim 3, **characterized in that** the intermediate portion (483) delimits, with the front sealing surface (60), or one of the front sealing surfaces and the rear sealing surface (62), or one of the rear sealing surfaces, in the mounting position, a sealed annular volume (300) surrounding the outer perimeter (46) of the interface between the wheel hub (12) and the torque converter (14), for example of more than 300 mm$^3$, preferentially of more than 1000 mm$^3$, and for example of less than 2000 mm$^3$, preferably of less than 1500 mm$^3$.

5. Static seal (48) according to any one of the preceding claims, **characterized in that** at least one of the following features is produced:

- the rear sealing surface (62) or one of the rear sealing surfaces is capable, in the mounting position, of radially bearing against a cylindrical rear static seal seat formed on the torque converter (14);
- the rear sealing surface (62) or one of the rear sealing surfaces is capable, in the mounting position, of axially bearing against a planar rear static seal seat formed on the torque converter (14);
- the rear sealing surface (62) or one of the rear sealing surfaces is capable, in the mounting position, of bearing against a frustoconical rear static seal seat formed on the torque converter (14);
- the rear sealing surface (62) or one of the rear sealing surfaces is formed by a sealing lip (62) which is capable, in the mounting position, of bearing against a rear static seal seat formed on the torque converter (14), the sealing lip (62) preferably having a converging profile oriented toward the torque converter (14).

6. Static seal (48) according to one of the preceding claims, **characterized in that** the static seal (48) includes a body made of a plastics material, for example an elastomer or thermoplastic material, and forming at least in part the fastening portion (50), and preferably the front sealing surface (56, 58, 60) or at least one of the front sealing surfaces (56, 58, 60) and/or the rear sealing surface (62) or one of the rear sealing surfaces.

7. Static seal according to claim 6, **characterized in that** it further comprises a reinforcement (66) made of a material that is more rigid than the body, at least one of the following features preferably being produced:

    - the rigid reinforcement (66) is capable, in the mounting position, of being shrunk onto the torque converter;
    - the rigid reinforcement (66) surrounds the rear sealing surface (62);
    - the rigid reinforcement (66) surrounds the fastening portion (50);
    - the rigid reinforcement (66) constitutes an encoder, in particular a magnetic or optical encoder (64);
    - the rigid reinforcement (66) supports an encoder, in particular a magnetic or optical encoder (64).

8. Static seal (48) according to one of the preceding claims,
    **characterized in that** the static seal includes:

    - a baffle device (484) projecting radially outwards and capable of engaging with a complementary element (184) rigidly connected to a wheel support (18) and located near the static seal (48) in the mounting position, and/or
    - an encoder (64) in particular a magnetic or optical encoder.

9. Static seal (48) according to one of the preceding claims,
    **characterized in that**

    - the front sealing surface (56, 58, 60) or one of the front sealing surfaces is formed on the fastening portion; and/or
    - the front sealing surface (56, 58, 60) or one of the front sealing surfaces is capable, in the mounting position, of continuously annularly bearing against a face (54) of the flange (32) facing toward the inner race ring (30); and/or
    - the front sealing surface (56, 58, 60) or one of the front sealing surfaces is capable, in the mounting position, of continuously annularly bearing against a face (54) of the flange (32) facing away from the reference axis (200).

10. Static seal (48) according to any one of the preceding claims, **characterized in that** the front sealing surface (56, 58, 60) or one of the front sealing surfaces is capable, in the mounting position, of continuously annularly bearing against the inner race ring (30) or against a deflector (332) or an encoder (334) attached to the inner race ring (30), one or more of the following features preferably being produced:

    - the front sealing surface (56, 58, 60) or one of the front sealing surfaces is capable, in the mounting position, of radially bearing against a cylindrical front static seal seat formed on the inner race ring (30) or on a deflector (332) or an encoder (334) attached to the inner race ring (30);
    - the front sealing surface (56, 58, 60) or one of the front sealing surfaces is capable, in the mounting position, of axially bearing against a planar front static seal seat formed on the inner race ring (30) or on a deflector (332) or an encoder (334) attached to the inner race ring (30);
    - the front sealing surface (56, 58, 60) or one of the front sealing surfaces is capable, in the mounting position, of bearing against an edge, either sharp or not, formed on the inner race ring (30) or on a deflector (332) or an encoder (334) attached to the inner race ring (30);
    - the front sealing surface (56, 58, 60) or one of the front sealing surfaces is formed by a front sealing lip which is capable, in the mounting position, of bearing against a front static seal seat formed on the race ring (30) or on a deflector (332) or an encoder (334) attached to the inner race ring (30).

11. Static seal (48) according to any one of the preceding claims, **characterized in that** the front sealing surface(s) (56, 58, 60) comprise at least one first front sealing surface (56, 58) which is capable, in the mounting position, of bearing against a first front static seal seat formed on the inner race ring (30) or on a deflector (332) or an encoder (334) attached to the inner race ring (30) and a second front sealing surface (60) which is capable, in the mounting position, of bearing against a second front static seal seat formed on the flange (32) of the wheel hub (12).

12. Vehicle drive wheel hub assembly (10) including a wheel hub (12), a torque converter (14), an inner race ring (30) shrunk onto the wheel hub (12) and held axially by a flange (32) forming a rear end (42) of the wheel hub (12), the wheel hub (12) and the torque converter (14) having an interface with an annular outer perimeter (46) at the rear end (42) of the wheel hub (12),
**characterized in that** it further includes a static seal (48) according to any one of the preceding claims, positioned in the mounting position and the reference axis (200) of which coincides with an axis of revolution (100) of the wheel hub (10).

13. Vehicle drive wheel hub assembly (10) according to claim 12, **characterized in that** the torque converter (14) includes a set of splines and radial ribs (38) engaging with a set of splines and radial ribs (40) formed on the wheel hub (12), and located axially at a distance from the rear end (42) of the wheel hub (12).

14. Vehicle drive wheel hub assembly (10) according to claim 13, **characterized in that** the wheel hub (12) includes a planar, toroidal or frustoconical annular rear contact surface (42) which is in surface contact with a planar, toroidal or frustoconical annular contact surface (44) of the torque converter (14), the outer perimeter (46) being formed at the outer periphery of the rear contact surface (42) of the wheel hub (12) and of the annular contact surface (44) of the torque converter (14).

15. Vehicle drive wheel hub assembly (10) according to any one of claims 12 to 14, **characterized in that** the torque converter (14) includes a set of face splines and ribs engaging with a set of face splines formed at the rear end (42) of the wheel hub (12).

16. Vehicle drive wheel hub assembly (10) according to any one of claims 12 to 15, wherein the static seal (48) according to claim 4 is **characterized in that** the sealed annular volume (300) is filled with an at least partially liquid or paste-like product, for example a lubricant, or a porous polymer matrix material containing a liquid or paste-like lubricant.

[Fig. 1]

Fig.1

[Fig. 2]

Fig.2

[Fig. 3]

Fig.3

[Fig. 4]

Fig.4

EP 4 311 957 B1

[Fig. 5]

Fig.5

20

[Fig. 6]

Fig.6

[Fig. 7]

Fig.7

**EP 4 311 957 B1**